# EUROPÄISCHE PATENTSCHRIFT

(11) **EP 0 613 569 B1**
(45) Veröffentlichungstag und Bekanntmachung des Hinweises auf die Patenterteilung: **06.11.1996**
(21) Anmeldenummer: 93918955.1
(22) Anmeldetag: 08.09.1993
(51) Int. Cl.: G02B 21/12, G02B 21/06, G02B 5/02

(54) **HELLFELD-DURCHLICHT-BELEUCHTUNGSEINRICHTUNG FÜR MIKROSKOPE**
BRIGHT-FIELD TRANSMISSION ILLUMINATION DEVICE FOR MICROSCOPES
DISPOSITIF D'ECLAIRAGE A FOND CLAIR ET PAR TRANSMISSION POUR MICROSCOPES

(30) Priorität: 19.09.1992 DE 4231406
(43) Veröffentlichungstag der Anmeldung: 07.09.1994
(73) Patentinhaber: LEICA MIKROSKOPIE UND SYSTEME GmbH, D-35530 Wetzlar (DE)
(72) Erfinder: STANKEWITZ, Hans-Werner, D-35579 Wetzlar (DE)
(74) Vertreter: Stamer, Harald, Dipl.-Phys.
(86) Internationale Anmeldenummer: DE9300818
(87) Internationale Veröffentlichungsnummer: WO9407170

(56) Entgegenhaltungen:
- AU-A- 183 246
- DE-A- 3 708 647
- DE-A- 4 102 507
- GB-A- 887 231
- US-A- 3 421 808
- PATENT ABSTRACTS OF JAPAN vol. 8, no. 92 (P-271)27. April 1984 & JP,A,59 007 325 (NIHON KOUGAKU KOGYO) 14. Januar 1984
- PATENT ABSTRACTS OF JAPAN vol. 9, no. 232 (P-389)18. September 1985 & JP,A,60 086 519 (HITACHI SEISAKUSHO) 16. Mai 1985
- PATENT ABSTRACTS OF JAPAN vol. 9, no. 182 (P-376)27. Juli 1985 & JP,A,60 052 838 (FUJI XEROX) 26. März 1985

## Beschreibung

Die Erfindung betrifft eine Hellfeld-DurchlichtBeleuchtungseinrichtung für Mikroskope gemäß dem Oberbegriff des Patentanspruchs 1.

Die Hellfeld-Durchlicht-Beleuchtungseinrichtungen für Mikroskope werden i.A. gemäß den Köhler'schen Beleuchtungsbedingungen ausgeführt. Dabei soll die Lichtquelle eine gleichmäßige Ausleuchtung des Objektfeldes und der Eintrittspupille des Objektives gewährleisten. Das Auflösungsvermögen dieser mikroskopischen Anordnung hängt sowohl von der Apertur des verwendeten Objektives als auch von der Beleuchtungsapertur ab. Bei größeren Beleuchtungsaperturen steigt zwar das erreichbare Auflösungsvermögen des mikroskopischen Systems, jedoch nimmt gleichzeitig der Bildkontrast ab. Die Beleuchtungsapertur muß zur optimalen Nutzung des verwendeten Objektives an die Objektivapertur angepaßt werden.

Der Bildkontrast ist außerdem von der Größe des ausgeleuchteten Objektfeldes abhängig. Dieses Feld sollte nicht größer sein als das vom Objektiv aufgenommene Objektfeld, um die negativen Einflüsse durch Streulicht bzw. ein Überstrahlen zu vermeiden.

Das Objektfeld ist dem Abbildungsmaßstab des verwendeten Objektives proportional. Aus diesem Grund muß bei jedem Objektivwechsel auch eine entsprechende Anpassung der das ausgeleuchtete Objektfeld begrenzenden Leuchtfeldblende erfolgen.

Eine Regelung der Gesamthelligkeit kann aus den o.a. Gründen nicht durch eine Größenänderung der Apertur- oder Leuchtfeldblende erfolgen, sondern muß unabhängig davon durch Graufilter oder eine Regelung der Lampenspannung vorgenommen werden.

Bei bekannten Beleuchtungseinrichtungen für Mikroskope werden Halogenlampen verwendet, die üblicherweise eine Wendelfläche im Seitenverhältnis von 2:1 aufweisen. Dieses rechteckige Leuchtfeld kann mit einem geeignet geformten Hohlspiegel auf ein quadratisches Wendelbild der Lichtquelle gebracht und bei der Köhler'schen Beleuchtung in die kreisförmige Aperturblende abgebildet werden.

Bei der Verwendung von Objektiven mit kleinen Aperturen bzw. großen Feldern besteht die Schwierigkeit, daß gemäß dem Cos-Gesetz die Lichtintensität zum Leuchtfeldrand hin abimmt, während bei der Verwendung von Objektiven mit großen Aperturen bzw. kleinen Feldern zur Ausleuchtung der Aperturblende die Größe der abgebildeten Lampenwendel nicht ausreicht. Dies führt in der Ebene der Aperturblende zu Inhomogenitäten in der Ausleuchtung.

Gemäß der AT-PS 183 246 wurde letzteres Problem dadurch gelöst, daß über eine im Beleuchtungsstrahlengang eingebrachte Mattscheibe das Bild der Lampenwendel gestreut wurde. Mit dieser Anordnung kann eine große Aperturblende durch ein kleines Feld gleichmäßig ausgeleuchtet werden. Dies ist jedoch mit dem großen Nachteil verbunden, daß im Beleuchtungsstrahlengang unkontrolliertes Streulicht in die Objektebene gelangt und somit der Kontrast und das Auflösungsvermögen des gesamten mikroskopischen Systems abnimmt.

Eine Beleuchtungseinrichtung für optische Geräte, die diesen Nachteil behebt, ist aus der DE 41 02 507 A1 bekannt. Über eine im Beleuchtungsstrahlengang angeordnete Deflektorscheibe mit mehreren gleichmäßig über die gesamte Fläche verteilten Einzelprismen wird eine gleichmäßige Ausleuchtung der Aperturblende dadurch erreicht, daß die Lichtquelle mit mehreren Nebenbildern in die Ebene der Aperturblende optisch scharf abgebildet wird.

Eine Beleuchtungs einrichtung für optische Geräte ist auch aus der JP-A-59- 7325 bekannt. In einer Köhler'schen Beleuchtungsanordnung ist eine Deflektorscheibe derart angeordnet, daß die Wendel mehrfach in die Aperturblende abgebildet wird.

Bei diesen Beleuchtungseinrichtungen wird jedoch das Cos-Gesetz nicht berücksichtigt. Bedingt durch den Abstrahlwinkel erfolgt eine Abnahme der Helligkeit in der Leuchtfeldblendenebene zu dessen Rand. Bei der Nutzung von großen Feldern, d.h. großem Durchmesser der Kollektorlinse und kleinen Aperturen, wird keine gleichmäßige Ausleuchtung der Leuchtfeldblendenebene erreicht.

Es ist daher Aufgabe der vorliegenden Erfindung, eine Hellfeld-Durchlichtbeleuchtungseinrichtung für ein Mikroskop zu schaffen, die eine gleichmäßige Ausleuchtung der Leuchtfeldblende sowohl für kleine als auch für große Felder ermöglicht.

Diese Aufgabe wird erfindungsgemäß durch die im kennzeichnenden Teil des Patentanspruchs 1 angegebenen Merkmale gelöst.

Vorteilhafte Weiterbildungen der Erfindung sind Gegenstand der Unteransprüche.

Die Erfindung wird anhand eines Ausführungsbeispiels mit Hilfe der schematischen Zeichnungen näher erläutert. Es zeigen:
- Fig. 1:: eine Beleuchtungseinrichtung mit einem Strahlengang für große Felder und kleine Aperturen
- Fig. 2:: eine Beleuchtungseinrichtung mit einem Strahlengang für kleine Felder und große Aperturen
- Fig. 3:: eine Rasterscheibe mit Einzelprismen
- Fig. 4:: eine Rasterscheibe mit Laminargitter

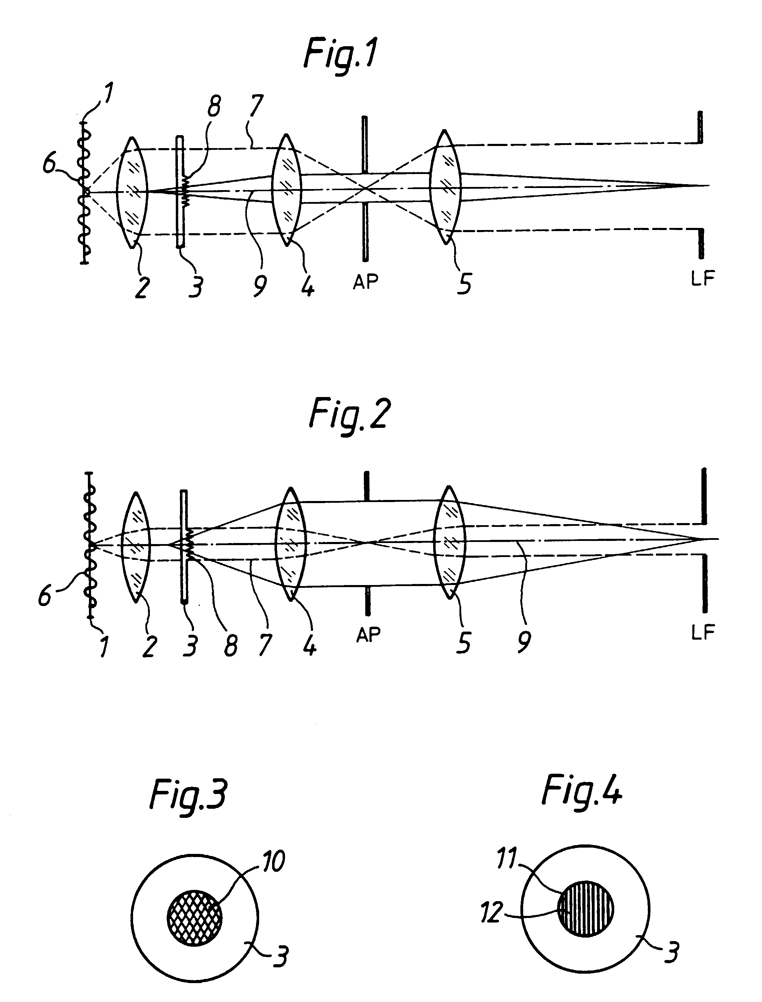

Die Figur 1 zeigt einen Durchlichtbeleuchtungsstrahlengang 7 mit einem großen Feld (LF) und kleiner Apertur (AP). Ausgehend von der Lichtquelle 1 mit der Lampenwendel 6, sind im Strahlengang 7 eine Kollektorlinse 2, eine Rasterscheibe 3, ein erstes Linsenglied 4, eine Aperturblenden AP, ein zweites Linsenglied 5 und eine Leuchtfeldblende LF vorgesehen. Die Rasterscheibe 3 ist als durchsichtige planparallele Platte mit einem im Bereich der optischen Beleuchtungsachse 9 angeordneten und als kreisförmige Fläche ausgebildteten Raster 8 ausgeführt. Über die Kollektorlinse 2 und das erste Linsenglied 4 wird gemäß den Köhler'schen Beleuchtungsbedingungen die Lichtquelle 1 bzw. deren Lampenwendel 6 mit dem gestrichelt gezeichneten Strahlengang in der Aperturblende AP abgebildet. Über das zweite Linsenglied 5 wird die Lichtquelle 1 nach unendlich abgebildet. Der durchgezeichnet dargestellte Strahlengang des Leuchtfeldes wird über die beiden Linsenglieder 4 und 5 geführt und in der Ebene der Leuchtfeldblende LF fokussiert abgebildet. Aus der Zeichnung ist erkennbar, daß zu dieser fokussierten Abbildung eine gleichmäßig ausgeleuchtete Ebene zwischen der Kollektorlinse und der Rasterscheibe herangezogen wird.

Gemäß dem Cos-Gesetz nimmt die Lichtintensität bei großen Feldern in der Leuchtfeldblende LF zum Rand hin ab. Über die im Beleuchtungsstrahlengang 7 angeordnete Rasterscheibe 3 wird jedoch eine Streuung bzw. Brechung der Lichtes im Bereich der Beleuchtungsachse 9 vorgenommen. Durch diese Streuung wird die in der Leuchtfeldblende LF vorhandene Inhomogenität kompensiert.

Das Raster 8 hat in dieser Beleuchtungsanordnung für große Felder keinen entscheidenden Einfluß auf die Ausleuchtung der Aperturblende AP, da für deren Ausleuchtung im Bereich des Kollektors ein großes Feld verwendet wird. Der Lichtanteil, der über den ungerasterten Teil der Rasterscheibe 3 zur Ausleuchtung der Aperturblende AP benutzt wird, ist im Verhältnis zu dem über das Raster 8 geführten Lichtanteil wesentlich größer.

Die Figur 2 zeigt einen Durchlichtbeleuchtungsstrahlengang 7 gemäß der Fig. 1, bei dem jedoch ein kleines Feld (LF) und eine große Apertur (AP) vorliegen. Die optischen Bauteile und verwendeten Bezugszeichen sind denen der Figur 1 identisch.

Das Raster 8 hat in dieser Beleuchtungsanordnung für kleine Felder keinen entscheidenden Einfluß auf die Ausleuchtung der Leuchtfeldblende LF, da die Randstrahlen der Lichtquelle 1 für die Ausleuchtung der Ebene LF nicht genutzt werden. Der Einfluß des Rasters 8 wird bei dieser Beleuchtung in der Aperturblende AP deutlich, da im Bereich des Kollektors 2 nur ein kleines Feld für die Ausleuchtung einer großen Apertur (AP) herangezogen wird. Über die Rasterung 8 wird das Bild der hier genutzten Teilfläche der Lampenwendel 6 in der Ebene der Aperturblende AP aufgespalten und in nebeneinander liegenden Teilbildern zur vollen Ausleuchtung der Ebene AP abgebildet.

Die o.a. Teilbilder der Lampenwendel 6 werden natürlich auch in der Aperturebene AP gemäß der Fig. 1 erzeugt. Deren Anteil an der Ausleuchtung der gesamten Ebene AP ist jedoch, wie o.a. vernachlässigbar gering.

Die Figur 3 zeigt ein Ausführungsbeispiel der verwendeten Rasterscheibe 3 mit dem in der Mitte angeordneten ringförmigen Rasterung 8, die hier einzelne, nebeneinander angeordnete Prismen 10 aufweist.

Die Figur 4 zeigt ein zweites Ausführungsbeispiel der verwendeten Rasterscheibe 3. Als Rasterung 8 ist hier ein Laminargitter 11 mit nebeneinander angeordneten Gitterlinien 11 dargestellt. Bei der Verwendung eines Gitters können selbstverständlich auch andere Gitterformen wie z.B. gekreuzte Gitter, Gitter mit an die Wendelfläche der Lichtquelle angepaßten unterschiedlichen Gitterkonstanten verwendet werden.

### Bezugszeichenliste

- 1 -: Lichtquelle
- 2 -: Kollektorlinse
- 3 -: Rasterscheibe
- 4 -: Linsenglied
- 5 -: Linsenglied
- 6 -: Wendelfläche von 1
- 7 -: Beleuchtungsstrahlengang
- 8 -: Raster von 3
- 9 -: Beleuchtungsachse von 7
- 10 -: Einzelprismen
- 11 -: Laminargitter
- 12 -: Gitterlinien von 11

## Patentansprüche

1. Hellfeld-Durchlichtbeleuchtungseinrichtung für ein Mikroskop, mit einer Lichtquelle (1) mit rechteckiger Wendelfläche (6), einer Kollektorlinse (2), einer der Kollektorlinse (2) nachgeordneten Rasterscheibe (3) und mit weiteren im Beleuchtungsstrahlengang (7) angeordneten Linsengliedern (4,5) zur Erzeugung einer Köhler'schen Beleuchtung, **dadurch gekennzeichnet**, daß zur gleichmäßigen Ausleuchtung der Aperturblende (AP) bei großen Aperturen und kleinen Objektfeldern und zur gleichmäßigen Ausleuchtung der Leuchtfeldblende (LF) bei kleinen Aperturen und großen Objektfeldern die Rasterscheibe (3) als Platte mit einem planparallelen äußeren Bereich, durch welchen im wesentlichen die Ausleuchtung der Aperturblende (AP) bei großer Leuchtfeldblende (LF) erfolgt, und mit einem zentralen, um die Beleuchtungsachse (9) als kreisförmige Fläche angeordneten Raster (8) ausgebildet ist, durch welches der für kleine Felder genutzte Bereich der Wendelfläche (6) mehrfach in die Aperturblende (AP) abgebildet wird.

2. Hellfeld-Durchlichtbeleuchtungseinrichtung nach Anspruch 1, **dadurch gekennzeichnet**, daß das Raster (8) nebeneinander angeordnete Einzelprismen (10) aufweist.

3. Hellfeld-Durchlichtbeleuchtungseinrichtung nach Anspruch 1, **dadurch gekennzeichnet**, daß das Raster (8) als Laminargitter (11) mit einzelnen parallel zueinander angeordneten Gitterlinien (12) ausgebildet ist.

## Claims

1. Bright field transmitted light illuminating equipment for a microscope, with a light source (1) with rectangular coil surface (6), a collector lens (2), a raster disc (3) arranged downstream of the collector lens (2) and with further lens members (4, 5), which are arranged in the illumination ray path (7), for the production of a Kohler type illumination, characterised thereby, that for the uniform illumination of the aperture stop (AP) in the case of large apertures and small object fields and for the uniform illumination of the light field stop (LF) in the case of small apertures and large object fields, the raster disc (3) is constructed as a plate with a parallelly planar outer region, through which substantially the illumination of the aperture stop (AP) takes place in the case of large light field stop (3), and with a central raster (8), which is arranged as a circular area around the illumination axis (9) and through which the region of the coil surface (6), which is used for small fields, is imaged several times into the aperture stop (AP).

2. Bright field transmitted light illuminating equipment according to claim 1, characterised thereby, that the raster (8) comprises several individual prisms (10) arranged one beside the other.

3. Bright field transmitted light illuminating equipment according to claim 1, characterised thereby, that the raster (8) is constructed as laminar grating (11) with individual grating lines (12) arranged one parallelly to the other.

## Revendications

1. Dispositif d'éclairage à fond clair et par transmission pour un microscope avec une source de lumière (1) ayant une surface de filament rectangulaire (6), un collecteur (2), un disque à grille (3) placé derrière le collecteur (2) et avec des lentilles (4, 5) agencées dans le trajet des rayons d'éclairage (7) pour la production d'un éclairage de Köhler, caractérisé en ce que pour l'éclairement régulier du diaphragme à ouverture (AP) pour de grandes ouvertures et de petits champs d'objet et pour l'éclairement régulier du diaphragme du champ lumineux (LF) pour de petites ouvertures et de grands champs d'objet, le disque à grille (3) est configuré sous la forme d'une plaque avec une zone externe à surfaces planes et parallèles, par où se produit essentiellement l'éclairement du diaphragme à ouverture (AP) pour un grand diaphragme de champ lumineux (LF) et avec une grille centrale (8) agencée autour de l'axe d'éclairage (9) sous la forme d'une surface circulaire, par laquelle la zone utilisée, pour les plus petits champs, de la surface du filament (6) est reproduite plusieurs fois dans le diaphragme à ouverture (AP).

2. Dispositif d'éclairage à fond clair et par transmission selon la revendication 1 caractérisé en ce que la grille (8) présente des prismes individuels (10) agencés côte à côte.

3. Dispositif d'éclairage à fond clair et par transmission selon la revendication 1, caractérisé en ce que la grille (8) a la forme d'un réseau laminaire (11) avec des lignes (12) individuelles et agencées parallèlement les unes aux autres.
